Europäisches Patentamt

European Patent Office

Office européen des brevets

(19)

(11) Veröffentlichungsnummer: **0 139 120**
**B1**

(12) # EUROPÄISCHE PATENTSCHRIFT

(45) Veröffentlichungstag der Patentschrift:
14.01.87

(21) Anmeldenummer: 84108991.5

(22) Anmeldetag: 30.07.84

(51) Int. Cl.⁴: **C 01 B 17/52,** C 22 B 1/10,
C 22 B 1/06

(54) Verfahren zur Herstellung von Schwefeldioxid.

(30) Priorität: 09.08.83 DE 3328710

(43) Veröffentlichungstag der Anmeldung:
02.05.85 Patentblatt 85/18

(45) Bekanntmachung des Hinweises auf die Patenterteilung:
14.01.87 Patentblatt 87/3

(84) Benannte Vertragsstaaten:
BE DE FR GB IT NL

(56) Entgegenhaltungen:
FR-A-1 052 063
FR-A-1 256 213
US-A-2 174 185

(73) Patentinhaber: BAYER AG, Konzernverwaltung RP
Patentabteilung, D-5090 Leverkusen 1 Bayerwerk
(DE)

(72) Erfinder: Lailach, Günter, Dr.,
Bodelschwinghstrasse 23, D-4150 Krefeld (DE)
Erfinder: Gerken, Rudolf, Dr., Ratherstrasse 79,
D-4150 Krefeld (DE)
Erfinder: Mücke, Christoph, Dipl.- Ing.,
Deswatinesstrasse 20, D-4150 Krefeld (DE)

EP 0 139 120 B1

LIBER, STOCKHOLM 1987

## Beschreibung

Die Erfindung betrifft ein Verfahren zur Herstellung von Schwefeldioxid durch thermische Spaltung von Metallsulfaten und gleichzeitige Röstung von sulfidischen Erzen in geeigneten Reaktoren, wobei die Metallsulfate gemeinsam mit den Metallsulfiden granuliert und in die Reaktoren eingetragen werden.

Die thermische Spaltung von Metallsulfaten und Schwefelsäure ist ein stark endothermer Prozeß. Um die erforderliche Reaktionswärme aufzubringen, werden deshalb häufig im gleichen Reaktionsraum Kohle, Heizöl oder Heizgase oder vorteilhaft Schwefel oder sulfidische Erze, bevorzugt Schwefelkies, verbrannt. Dabei wird die thermische Spaltung beim Einsatz von Heizöl oder -gas sowie von Schwefel häufig in Etagenöfen durchgeführt.

Das modernere Verfahren der thermischen Spaltung in Wirbelbettreaktoren erfordert die permanente Anwesenheit eines Wirbelbettes, wobei Eisenoxid besonders als Bettmaterial geeignet ist. Um die durch Abrieb entstandenen Verluste zu ersetzen, bietet sich Schwefelkies als Schwefel-Rohstoff direkt an, der auch ein relativ preiswerter Energieträger ist.

Problematisch bei diesem Verfahren ist es, den Schwefelkies, besonders in der Form feinteiliger Flotationskiese, und die Sulfate, die häufig schwefelsäurehaltig und hygroskopisch sind, in die Wirbelbettreaktoren einzutragen und so im Bett zu verteilen, daß Energieverbrauch und Energiefreisetzung möglichst in allen Bereichen der häufig recht großen Reaktoren im Gleichgewicht sind. Nur dann ist die maximale Spaltleistung zu erzielen, ohne daß Metallsulfate aus den Reaktoren ausgetragen werden oder Sinterbetten durch örtliche Überhitzung entstehen.

Aus der FR-A-1 256 213 ist ein Verfahren zur Herstellung von Schwefeldioxid durch thermische Spaltung von Metallsulfaten und gleichzeitige Röstung von sulfidischen Erzen in geeigneten Reaktoren bekannt, wobei die Metallsulfate gemeinsam mit den Metallsulfiden granuliert werden und in die Reaktoren eingetragen werden.

Das Ziel der Erfindung besteht darin, den Eintrag sowohl der sulfidischen Erze als auch der Metallsulfate in die Wirbelbettreaktoren, aber auch in andere geeignete Reaktoren wie Etagenöfen oder Drehrohröfen, zu verbessern und die optimale Vermischung der energieverbrauchenden und -liefernden Rohstoffe zu gewährleisten.

Es gelingt dadurch, daß die Metallsulfate und die sulfidischen Erze, im folgenden Kies genannt, gemeinsam, gegebenenfalls zusammen mit weiteren Energieträgern, granuliert und als Granalien in die Reaktoren eingespeist werden.

Gegenstand der vorliegenden Erfindung ist daher ein Verfahren zur Herstellung von Schwefeldioxid durch thermische Spaltung von Metallsulfaten und gleichzeitige Röstung von sulfidischen Erzen in geeigneten Reaktoren, wobei die Metallsulfate gemeinsam mit den Metallsulfiden granuliert und anschließend in Form von Granalien in die Reaktoren eingetragen werden, welches dadurch gekennzeichnet ist, daß die Metallsulfate mit Hilfe von Schwefelsäure und/oder Granulierhilfsmitteln vorgranuliert und anschließend mit Metallsulfiden umhüllt werden.

Während Kies allein nur schlecht granulierbar ist und weiche, für eine mechanische Förderung und den Ofeneintrag ungeeignete Granalien ergibt, wurde überraschenderweise gefunden, daß Metallsulfate und Kies gemeinsam gut granulierbar sind und stabile, für die mechanische Beanspruchung im Betriebsablauf einschließlich Reaktoreintrag geeignete Granalien ergeben.

Die erhaltenen Granalien bestehen aus einem inneren Kern, der aus den Metallsulfaten besteht, und einer Hülle aus Kies. Schwefelsäurehaltige Metallsulfate, wie sie bei der Eindampfung von $TiO_2$-Dünnsäuren oder Beizlösungen anfallen, lassen sich ohne Probleme granulieren, wenn sie als "trockener", d.h. nicht pastöser, sondern krümeliger Filterkuchen vorliegen.

Besonders geeignet als Metallsulfate im Sinne dieser Erfindung sind daher haftsäurehaltige Filterkuchen. Deren Haftsäuregehalt kann vor dem Granulieren durch mechanische Nachentfeuchtung, beispielsweise mit Bandpreßfiltern, verringert werden, wodurch die Krümelfähigkeit der Filterkuchen verbessert wird.

Das Granulieren kann in verschiedenen Apparaten durchgeführt werden. Granulierteller sind sehr gut geeignet, wobei das Granulieren ein- oder mehrstufig erfolgt.

Durch die hygroskopischen Eigenschaften der säurehaltigen Salze werden die Granalien aber schnell feucht und verkleben. Erfindungsgemäß erhält man relativ feste, gut rieselfähige Granalien, wenn man obige Granalien auf einem zweiten Granulierteller oder im äußeren Ring desselben Tellers mit Kies umhüllt. Die dabei gebildeten Granalien adsorbieren auch bei längerem Liegen an Luft nur wenig Feuchte und bleiben gut rieselfähig.

Trockene, rieselfähige Metallsulfate können durch Zugabe von Schwefelsäure, Öl oder bekannten Granulierhilfsmitteln, wie Melasse, Fischleim, Bentonit oder Sulfitablauge, vorgranuliert und anschließend mit Kies umhüllt werden.

Als Kiese können Feinkiese mit Teilchengrößen bis 5 mm eingesetzt werden. Besondere Vorteile bietet das Verfahren aber beim Einsatz von Flotationskiesen, deren Teilchengröße im wesentlichen unter 0,1 mm liegt. Die damit erhaltenen Granalien sind sehr gut rieselfähig und lagerfähig. Außerdem werden die großen Schwierigkeiten vermieden, die sich beim Eintragen von Flotationskiesen in Wirbelbettreaktoren ergeben.

Das Verhältnis von Kies zu Metallsulfaten kann in einem weiten Umfang variiert werden entsprechend den betrieblichen Erfordernissen beim Rohstoffeinsatz. Durch Zugabe der bekannten Granulierhilfsmittel kann die Festigkeit der Kieshülle besonders bei großem Verhältnis Kies zu Metallsulfat erhöht werden, was jedoch im allgemeinen für normale Handhabung nicht erforderlich ist.

2

Als vorteilhaft erweist sich die Maßnahme, daß die aus Metallsulfaten und Metallsulfiden bestehenden Granalien mit trockenen, nichthaftenden Stoffen gepudert werden. Als solche nichthaftenden Stoffe sind Kohlenstaub, Feinkohle, Schwefel und/oder Abbrand zu nennen. Durch dieses Pudern wird die Rieselfähigkeit der Granalien weiter verbessert.

Der Einsatz der erfindungsgemäß hergestellten Granalien gewährleistet einen gleichmäßigeren Betrieb der Reaktoren und höhere Spaltleistung, besonders bei Wirbeltettreaktoren.

Die Vorteile der Erfindung sollen durch die nachfolgenden Beispiele verdeutlicht werden, ohne daß der Umfang der Erfindung dadurch eingeschränkt wird.

**Beispiel 1: (Vergleichbeispiel)**

Krümelige Metallsulfate (vorwiegend Fe-Sulfat mit Mg-, Al, Mn-u.a. Sulfaten) mit ca. 30 Gew.-% Haftsäure (als salzfreie Säure mit 65 % H2SO4) (= Filtersalz I) wurden in einem Granulierteller granuliert. Nach 1 - 2 Minuten waren aus den Feinanteilen Granalien von 3 - 10 mm Durchmesser geworden. Bei weiterem Rollen im Teller wurde die Granalienoberfläche feucht glänzend und nach 4 - 5 Minuten begannen die Granalien miteinander zu verkleben.

Wenn die Granalien nach 2 - 4 Minuten Verweilzeit im Granulierteller mit Braunkohlenstaub gepudert wurden, blieben sie rieselfähig.

Ein Teil der Granalien wurde im Gebäude offen in einer Schale stehen gelassen. Nach 48 Stunden waren die Granalien deutlich verklebt. Die Gewichtszunahme durch Adsorption von Luftfeuchtigkeit betrug 13,6 %.

**Beispiel 2: (Vergleichsbeispiel)**

Es wurde versucht, Schwefelkies A (Flotationskies mit 70 % unter 0,04 mm Korngröße) in einem Granulierteller zu granulieren. Dabei bildeten sich nur wenige Granalien mit 3 - 20 mm Durchmesser, die in der Hand leicht zerdrückt werden konnten und für die Einspeisung in Röstöfen mit den normalen Förder- und Dosierorganen nicht geeignet waren.

**Beispiel 3:**

In einem Granulierteller (d = 0,8 m) wurden Filtersalz I, das durch Nachentfeuchtung eines Drehfilterkuchens mittels Bandpreßfilter und Zerschlagen des plattigen Kuchens mittels Stiftmühle erzeugt wurde, und Schwefelkies A im Verhältnis 1: 1 gleichzeitig zugegeben. Nach 5 Minuten wurde das trockene, matt glänzende, gut rieselfähige Granulat entnommen. Die Siebanalyse ist in Tab. 1 enthalten.

**Beispiel 4:**

In den Granulierteller wurden 2 kg Filtersalz 1 gegeben. Nach 3 Minuten wurde zu den feucht glänzenden Granalien während 30 s 2 kg Schwefelkies A gegeben. Nach weiteren 2 Minuten wurden der Granulierteller gestoppt und die kugeligen Granalien gesiebt (Tab. 1).

Die Granalien waren von ausreichender Festigkeit für normale Beanspruchung bei Förderung, Bunkerung und Dosierung. Nach 3 Wochen in einer offenen Schale im Laborraum waren sie noch gut rieselfähig. Die Gewichtszunahme durch Feuchteadsorption betrug 3,2 %.

**Beispiel 5:**

Analog Beispiel 4 wurde Filtersalz I mit Schwefelkies B (Feinkies mit mittlerer Körnung 1,3 mm) granuliert. Die gebildeten Granalien hatten ein glänzenderes Aussehen und waren ebenfalls gut rieselfähig.

**Beispiel 6:**

Granalien wurden analog Beispiel 4 hergestellt und anschließend mit 100 g Braunkohlenstaub gepudert. Direkt nach der Herstellung wie auch nach 3 Wochen Lagerzeit in einer offenen Schale war die Rieselfähigkeit deutlich besser als bei ungepuderten Granalien entsprechend Beispiel 4.

**Beispiel 7:**

Analog Beispiel 4 wurden Filtersalz 1 und Schwefelkies A im Verhältnis 2: 1 (7 a) und 1: 2 (7 b) granuliert. In beiden Fällen wurden ausreichend feste, gut rieselfähige Granalien erhalten.

**Beispiel 8:**

Filtersalz II (Drehfilterkuchen mit 42 % 65 %iger Schwefelsäure als Haftfeuchte) wurde analog Beispiel 4 vorgranuliert und mit der gleichen Menge Schwefelkies A nachgranuliert. Die Granalien (Siebanalyse Tab. 1) waren gut rieselfähig aber deutlich weniger druckfest als im Beispiel 3 bis 7.

**Beispiel 9:**

Ein Granulierteller von 1 m Durchmesser und 0,2 m Tiefe war mit einem inneren zylindrischen Ring von 0,6 m Durchmesser und 0,15 m Tiefe ausgerüstet worden. In den inneren Bereich wurden 100 kg Filtersalz I/h dosiert. Die eben glänzenen Granalien aus Filtersalz I rollten in den äußeren Bereich und wurden dort mit 50 kg Schwefelkies A/h versetzt. Die über den äußeren Rand abrollenden Granalien waren sehr gut rieselfähig und gleichförmig (Tab. 1).

**Beispiel 10:**

Durch Entwässerung von Eisensulfat-Heptahydrat hergestelltes rieselfähiges Eisensulfat-Monohydrat wurde im inneren Bereich des Granuliertellers (entsprechend Beispiel 9) durch Besprühen mit Melasselösung granuliert. Die in den äußeren Bereich des Tellers abrollenden Granalien wurden im Gewichtsverhältnis 1: 1 mit Schwefelkies A versetzt. Es rollten gut rieselfähige Granalien aus dem äußeren Bereich ab, die in Körnung und Festigkeit ähnlich den entsprechend Beispiel 9 hergestellten waren.

**Tabelle 1**

Siebanalysen verschiedener Granulate

| Beispiel Nr. | < 2 mm Gew.-% | 2 - 6 mm Gew.-% | 6 - 10 mm Gew.-% | >10 mm Gew.-% |
|---|---|---|---|---|
| 3 | 32 | 38 | 23 | 7 |
| 4 | 7 | 66 | 22 | 5 |
| 5 | 11 | 57 | 24 | 8 |
| 7 a | 12 | 59 | 25 | 4 |
| 7 b | 10 | 62 | 23 | 5 |
| 8 | 37 | 47 | 11 | 5 |
| 9 | 2 | 83 | 14 | 1 |

## Patentansprüche

1. Verfahren zur Herstellung von Schwefeloxid durch thermische Spaltung von Metallsulfaten und gleichzeitige Röstung von sulfidischen Erzen in geeigneten Reaktoren, wobei die Metallsulfate gemeinsam mit den Metallsulfiden granuliert und in die Reaktoren eingetragen werden, dadurch gekennzeichnet, daß die Metallsulfate mit Hilfe von Schwefelsäure und/oder Granulierhilfsmitteln vorgranuliert und anschließend mit Metallsulfiden umhüllt werden.

2. Verfahren gemäß Anspruch 1, dadurch gekennzeichnet, daß die Metallsulfate haftsäurehaltige Filterkuchen sind.

3. Verfahren gemäß einem der Ansprüche 1 oder 2, dadurch gekennzeichnet, daß vor dem Granulieren durch mechanische Nachentfeuchtung der Haftsäuregehalt der Filterkuchen verringert wird.

4. Verfahren gemäß einem der Ansprüche 1 bis 3, dadurch gekennzeichnet, daß die aus Metallsulfaten und Metallsulfiden bestehenden Granalien mit trockenen, nichthaftenden Stoffen gepudert werden.

5. Verfahren gemäß Anspruch 4, dadurch gekennzeichnet, daß die trockenen nichthaftenden Stoffe Kohlenstaub, Feinkohle, Schwefel und/oder Abbrand sind.

6. Verfahren gemäß einem der Ansprüche 1 bis 5, dadurch gekennzeichnet, daß das Granulieren mittels Granulierteller ein- oder mehrstufig erfolgt.

## Claims

1. Process for the production of sulphur dioxide by the thermal decomposition of metal sulphates and the simultaneous roasting of sulphidic ores in suitable reactors, the metal sulphates being granulated together with the metal sulphides and introduced into the reactors, characterised in that the metal sulphates are pregranulated with the aid of sulphuric acid and/or granulating auxiliaries and are then coated with metal sulphides.

2. Process according to Claim 1, characterised in that the metal sulphates are filter cakes containing adhering acid.

3. Process according to one of Claims 1 or 2, characterised in that the adhering acid content of the filter cakes is reduced before granulation by mechanical post-demoisting.

4. Process according to one of Claims 1 to 3, characterised in that the granules consisting of metal sulphates and metal sulphides are powdered with dry, non-adhering substances.

5. Process according to Claim 4, characterised in that the dry non-adhering substances are coal dust, fine coal, sulphur and/or roasting residue.

6. Process according to one of Claims 1 to 5, characterised in that the granulation is carried out by means of pan granulators, in one or more stages.

## Revendications

1. Procédé de production d'anhydride sulfureux par décomposition thermique de sulfates métalliques et grillage simultané de minerais du type sulfure dans des réacteurs appropriés, les sulfates métalliques étant alors granulés en commun avec les sulfures métalliques et chargés ainsi dans les réacteurs, caractérisé en ce que les sulfates métalliques sont préalablement granulés à l'aide d'acide sulfurique et/ou d'adjuvants de granulation, puis enveloppés de sulfures métalliques.

2. Procédé suivant la revendication 1, caractérisé en ce que les sulfates métalliques sont des gâteaux de filtre auxquels adhère de l'acide.

3. Procédé suivant l'une des revendications 1 et 2, caractérisé en ce que la teneur en acide adhérant aux gâteaux de filtre est réduite avant la granulation par une poursuite mécanique de la déshumidification.

4. Procédé suivant l'une des revendications 1 à 3, caractérisé en ce que les granules formés de sulfates et de sulfures métalliques sont saupoudrés de matières sèches n'adhérant pas.

5. Procédé suivant la revendication 4, caractérisé en ce que les matières sèches n'adhérant pas sont du charbon en poudre des fines de charbon, du soufre et/ou un résidu de grillage.

6. Procédé suivant l'une des revendications 1 à 5, caractérisé en ce que la granulation est effectuée en une ou plusieurs étapes au moyen de plateaux de granulation.